# FASCICULE DE BREVET EUROPEEN

(11) **EP 4 215 791 B1**
(45) Date de publication et mention de la délivrance du brevet: **06.03.2024**
(21) Numéro de dépôt: 23151187.4
(22) Date de dépôt: 11.01.2023
(51) Int. Cl.: F16L 59/18, F16L 39/00, F16L 59/16, F16L 59/065

(54) **DISPOSITIF DE RACCORDEMENT DE DEUX CONDUITS À DOUBLE PAROI ET CANALISATION D'HYDROGÈNE COMPRENANT LEDIT DISPOSITIF DE RACCORDEMENT**
VORRICHTUNG ZUM VERBINDEN ZWEIER DOPPELWANDLEITUNGEN UND WASSERSTOFFLEITUNG MIT DIESER VERBINDUNGSVORRICHTUNG
DEVICE FOR CONNECTING TWO DOUBLE-WALLED PIPES AND HYDROGEN PIPELINE COMPRISING SAID CONNECTION DEVICE

(30) Priorité: 25.01.2022 FR 2200603
(43) Date de publication de la demande: 26.07.2023
(73) Titulaire: AIRBUS OPERATIONS (S.A.S.), 31060 Toulouse (FR); Airbus (S.A.S.), 31700 Blagnac (FR)
(72) Inventeur: LAVERNE, Julien, 31060 TOULOUSE (FR); LANDOLT, Jonathan, 31700 BLAGNAC (FR)
(74) Mandataire: Airbus-OPS SAS

(56) Documents cités:
- WO-A1-2012/048535
- GB-A- 2 166 514
- US-A1- 2019 162 357

## Description

La présente demande se rapporte à un dispositif de raccordement de deux conduits ainsi qu'à une canalisation d'hydrogène comprenant ledit dispositif de raccordement.

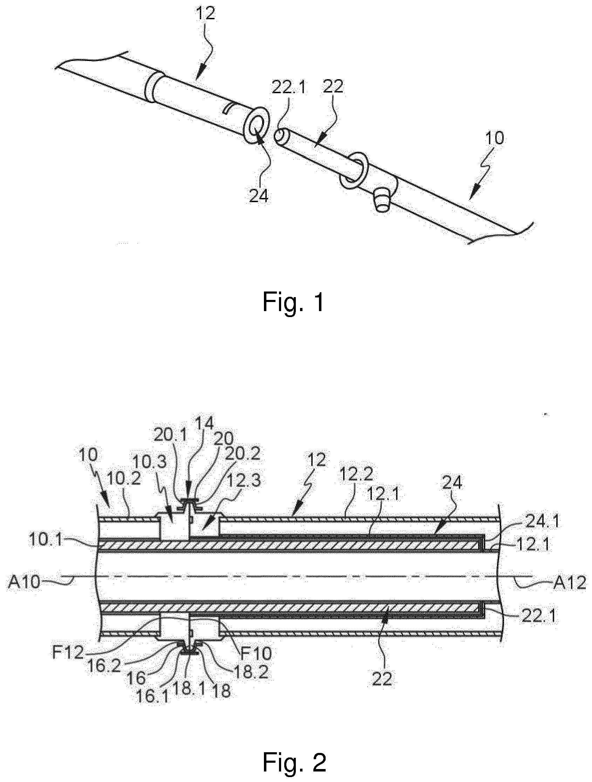

Selon un mode de réalisation visible sur les figures 1 et 2, un dispositif de raccordement d'une canalisation d'hydrogène comprend :
- un premier conduit 10 à double paroi présentant un premier axe A10, des premiers conduits intérieur et extérieur 10.1, 10.2 coaxiaux au premier axe A10 ainsi qu'une première bague d'extrémité 10.3 reliant de manière étanche les premiers conduits intérieur et extérieur 10.1, 10.2,
- un deuxième conduit 12 à double paroi présentant un deuxième axe A12, des deuxièmes conduits intérieur et extérieur 12.1, 12.2 coaxiaux au deuxième axe A12 ainsi qu'une deuxième bague d'extrémité 12.3 reliant de manière étanche les deuxièmes conduits intérieur et extérieur 12.1, 12.2,
- un système de liaison 14 configuré pour maintenir les première et deuxième bagues d'extrémité 10.3, 12.3 plaquées l'une contre l'autre.

Selon une configuration, la première bague d'extrémité 10.3 comprend une première face frontale F10 annulaire, perpendiculaire au premier axe A10 et orientée vers le deuxième conduit 12 en fonctionnement, ainsi qu'une première collerette 16, en saillie par rapport au premier conduit extérieur 10.2, qui présente une première face latérale 16.1 coplanaire à la première face frontale F10 ainsi qu'une deuxième face latérale 16.2 opposée à la première face frontale 16.1 et formant avec cette dernière un angle qui s'évase en direction du premier axe A10.

En parallèle, la deuxième bague d'extrémité 12.3 comprend une deuxième face frontale F12 annulaire, perpendiculaire au deuxième axe A12 et orientée vers le premier conduit 10 en fonctionnement, ainsi qu'une deuxième collerette 18, en saillie par rapport au deuxième conduit extérieur 12.2, qui présente une première face latérale 18.1 coplanaire à la deuxième face frontale F12 ainsi qu'une deuxième face latérale 18.2 opposée à la première face frontale 18.1 et formant avec cette dernière un angle qui s'évase en direction du deuxième axe A12. Le dispositif de raccordement comprend un système d'étanchéité comme une gorge prévue au niveau de la première ou deuxième face frontale F10, F12 ainsi qu'un joint annulaire logé et comprimé dans ladite gorge lorsque les première et deuxième faces frontales F10, F12 sont plaquées l'une contre l'autre.

Le système de liaison 14 comprend un collier de serrage 20, avec une section en U ou en V par exemple, qui présente deux ailes 20.1, 20.2 configurées pour être plaquées contre les deuxièmes faces latérales 16.2, 18.2 des première et deuxième collerettes 16, 18, le serrage du collier de serrage 20 tendant à augmenter l'effort de pression des première et deuxième faces frontales F10, F12 l'une contre l'autre.

Dans le cas d'un dispositif de raccordement dit à baïonnette adapté pour une canalisation d'hydrogène, le premier conduit intérieur 10.1 comprend une extension 22, en saillie par rapport à la première face frontale F10, qui présente un chant d'extrémité 22.1. En complément, le deuxième conduit intérieur 12.1 comprend un tronçon final élargi 24 et relié au reste du deuxième conduit intérieur 12.1 par un épaulement 24.1. En fonctionnement, le tronçon final élargi 24 est configuré pour recevoir l'extension 22 du premier conduit intérieur 10.1. Pour renforcer l'étanchéité, le tronçon final élargi 24 comprend un diamètre intérieur égal ou très légèrement supérieur au diamètre extérieur de l'extension 22 et l'épaulement 24.1 est séparé de la deuxième face frontale F12 d'une distance égale ou très légèrement supérieure à celle séparant le chant d'extrémité 22.1 et la première face frontale F10. Plus cette distance est importante, plus l'étanchéité est renforcée.

En fonctionnement, un vide de l'ordre de 10-7 à 10-11 bars doit être maintenu entre les conduits intérieurs 10.1, 12.1 et les conduits extérieurs 10.2, 12.2.

Même si un tel dispositif de raccordement à baïonnette offre d'excellentes performances en matière d'étanchéité, il n'est pas optimal pour un aéronef. En effet, la maintenance d'un dispositif de raccordement à baïonnette s'avère difficile en raison du niveau de vide, de l'ordre de 10-7 à 10-11, nécessaire à son bon fonctionnement. De plus, l'installation d'un dispositif de raccordement à baïonnette nécessite un dégagement important selon la direction des premier et deuxième axes A10, A12 pour permettre l'insertion de l'extension 22 du premier conduit 10 dans le tronçon final élargi 24 du deuxième conduit 12. Par conséquent, lors de la conception du cheminement de la canalisation, il est nécessaire de tenir compte de ces dégagements, ce qui se traduit généralement par une longueur et une masse pour la canalisation d'hydrogène plus importantes qu'en l'absence de dégagements.

Les documents GB 2 166 514 A, US 2019/162357 A1 et WO 2012/048535 A1 décrivent des raccordements de conduits à double paroi selon l'art antérieur.

La présente invention vise à remédier à tout ou partie des inconvénients de l'art antérieur.

A cet effet, l'invention a pour objet un dispositif de raccordement de premier et deuxième conduits à double paroi, le premier conduit comportant un premier conduit intérieur qui présente un tronçon d'extrémité et un chant d'extrémité ainsi qu'un premier conduit extérieur, espacé du premier conduit intérieur, qui présente un tronçon d'extrémité et un chant d'extrémité ; le deuxième conduit comportant un deuxième conduit intérieur qui présente un tronçon d'extrémité et un chant d'extrémité ainsi qu'un deuxième conduit extérieur, espacé du deuxième conduit intérieur, qui présente un tronçon d'extrémité et un chant d'extrémité ; le dispositif de raccordement comprenant un système de raccordement intérieur configuré pour relier les premier et deuxième conduits intérieurs ainsi qu'un système de raccordement extérieur, configuré pour relier les premier et deuxième conduits extérieurs, comportant une première partie qui coopère avec le tronçon d'extrémité du premier conduit extérieur ainsi qu'une deuxième partie qui coopère avec le tronçon d'extrémité du deuxième conduit extérieur.

Selon l'invention, le système de raccordement extérieur est configuré de sorte qu'à une première température, au moins l'une des première et deuxième parties exerce un effort de contact sur le tronçon d'extrémité du premier ou deuxième conduit extérieur correspondant plus élevé qu'à une deuxième température supérieure à la première température.

En cas de fuite d'hydrogène au niveau du système de raccordement intérieur, le système de raccordement extérieur va exercer un effort de serrage plus important sur les premier et deuxième conduits extérieurs qu'en l'absence de fuite, contribuant ainsi à renforcer l'étanchéité. Ainsi, il n'est plus nécessaire de prévoir une extension au niveau du premier conduit intérieur se logeant dans un tronçon final élargi prévu au niveau du deuxième conduit intérieur.

Selon une autre caractéristique, le système de raccordement extérieur est réalisé en un premier matériau différent de ceux des premier et deuxième conduits extérieurs, ce premier matériau présentant un coefficient de dilatation plus important que ceux des premier et deuxième conduits extérieurs.

Selon une autre caractéristique, les chants d'extrémité des premier et deuxième conduits extérieurs sont espacés d'une distance permettant d'accéder au système de raccordement intérieur. En complément, le système de raccordement extérieur comprend un manchon qui présente une première partie positionnée autour du tronçon d'extrémité du premier conduit extérieur, une deuxième partie positionnée autour du tronçon d'extrémité du deuxième conduit extérieur ainsi qu'une partie intermédiaire située entre les première et deuxième parties.

Selon une autre caractéristique, les tronçons d'extrémité des premier et deuxième conduits extérieurs présentent chacun un filetage et un diamètre extérieur supérieur aux diamètres extérieurs des premier et deuxième conduits extérieurs en dehors des tronçons d'extrémité filetés. En complément, les première et deuxième parties du manchon présentent chacune un taraudage adapté au filetage du tronçon d'extrémité du premier ou deuxième conduit extérieur correspondant, la partie intermédiaire du manchon présentant un diamètre intérieur supérieur au plus grand diamètre extérieur du premier ou deuxième conduit extérieur pour permettre au manchon de coulisser par rapport audit premier ou deuxième conduit extérieur.

Selon une autre caractéristique, le dispositif de raccordement comprend au moins un matériau sacrificiel intercalé entre le système de raccordement extérieur et le tronçon d'extrémité du premier ou/et deuxième conduit extérieur correspondant.

Selon une autre caractéristique, le filetage d'au moins un tronçon d'extrémité des premier et deuxième conduits extérieurs est réalisé en un matériau sacrificiel.

Selon une autre caractéristique, les chants d'extrémité des premier et deuxième conduits intérieurs sont faiblement espacés. En complément, le système de raccordement intérieur comprend un manchon qui présente une première partie positionnée autour du tronçon d'extrémité du premier conduit intérieur ainsi qu'une deuxième partie positionnée autour du tronçon d'extrémité du deuxième conduit intérieur.

Selon une autre caractéristique, le manchon est réalisé en un premier matériau différent de ceux des premier et deuxième conduits intérieurs, le premier matériau présentant un coefficient de dilatation plus important que ceux des premier et deuxième conduits intérieurs. Selon une autre caractéristique, le dispositif de raccordement comprend un espace annulaire, autour du système de raccordement intérieur ainsi qu'autour d'au moins une portion de chacun des premier et deuxième conduits intérieurs située de part et d'autre du système de raccordement intérieur, et au moins un élément isolant thermique positionné dans l'espace annulaire et le garnissant au moins partiellement.

Selon une autre caractéristique, l'élément isolant occupe au moins 75% de l'espace annulaire, l'espace annulaire comprenant un volume restant soumis à un vide.

Selon une autre caractéristique, l'élément isolant comprend au moins un matelas rempli de microbilles.

Selon un premier mode de réalisation, l'élément isolant comprend un matelas rempli de microbilles de forme annulaire.

Selon un autre mode de réalisation, l'élément isolant comprend plusieurs couches de matelas remplis de microbilles, chaque matelas ayant une forme demi-cylindrique, les interstices entre les matelas d'une première couche étant décalés par rapport aux interstices entre les matelas d'une deuxième couche adjacente à la première couche.

L'invention a également pour objet une canalisation d'hydrogène comprenant au moins un dispositif de raccordement selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un dispositif de raccordement à l'état déconnecté illustrant un mode de réalisation de l'art antérieur,
- La figure 2 est une coupe longitudinale d'un dispositif de raccordement à l'état connecté illustrant un mode de réalisation de l'art antérieur,
- La figure 3 est une coupe longitudinale d'un dispositif de raccordement à l'état connecté illustrant un premier mode de réalisation de l'invention,
- La figure 4 est une coupe longitudinale d'un dispositif de raccordement à l'état connecté illustrant un deuxième mode de réalisation de l'invention,
- La figure 5 est une coupe transversale du dispositif de raccordement visible sur la figure 3, et
- La figure 6 est une coupe transversale d'un dispositif de raccordement illustrant un autre mode de réalisation de l'invention.

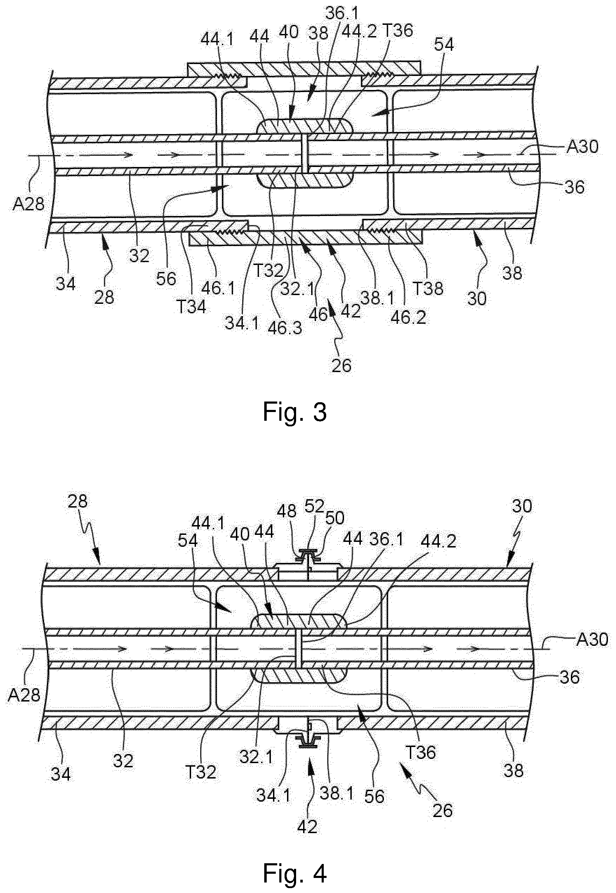

Selon des modes de réalisation visibles sur les figures 3 et 4, une canalisation comprend au moins un dispositif de raccordement 26 reliant des premier et deuxième conduits 28, 30 à double paroi. Selon une application, la canalisation est destinée à de l'hydrogène à température cryogénique.

Selon une configuration, le premier conduit 28 présente un premier axe A28 ainsi que des premiers conduits intérieur et extérieur 32, 34 coaxiaux au premier axe A28. Les premiers conduits intérieur et extérieur 32, 34 pourraient ne pas être coaxiaux entre eux. Quel que soit le mode de réalisation, les premiers conduits intérieur et extérieur 32, 34 sont espacés l'un de l'autre. Ils peuvent être maintenus écartés l'un de l'autre par au moins un écarteur.

En parallèle, le deuxième conduit 30 présente un deuxième axe A30 ainsi que des deuxièmes conduits intérieur et extérieur 36, 38 coaxiaux au deuxième axe A30. Les deuxièmes conduits intérieur et extérieur 36, 38 pourraient ne pas être coaxiaux entre eux. Quel que soit le mode de réalisation, les deuxièmes conduits intérieur et extérieur 36, 38 sont espacés l'un de l'autre. Ils peuvent être maintenus écartés l'un de l'autre par au moins un écarteur.

Le dispositif de raccordement 26 comprend un système de raccordement intérieur 40 configuré pour relier les premier et deuxième conduits intérieurs 32, 36 ainsi qu'un système de raccordement extérieur 42 configuré pour relier les premier et deuxième conduits extérieurs 34, 38. Selon une particularité, les systèmes de raccordement intérieur et extérieur 40, 42 sont distincts et espacés entre eux.

Selon un mode de réalisation visible sur les figures 3 et 4, les premier et deuxième conduits intérieurs 32, 36 comprennent respectivement des premier et deuxième chants d'extrémité 32.1, 36.1 situés dans des plans transversaux (perpendiculaires aux premier et deuxième axes A28, A30). Selon un agencement, les premier et deuxième chants d'extrémité 32.1, 36.1 sont faiblement espacés, d'une distance inférieure à 10 mm par exemple.

En complément, le système de raccordement intérieur 40 comprend un manchon 44 qui présente une première partie 44.1 positionnée autour d'un tronçon d'extrémité T32 du premier conduit intérieur 32 ainsi qu'une deuxième partie 44.2 positionnée autour d'un tronçon d'extrémité T36 du deuxième conduit intérieur 36. Selon une configuration, le système de raccordement intérieur 40 est démontable. A titre d'exemple, les première et deuxième parties 44.1, 44.2 du système de raccordement intérieur 40 sont vissées respectivement sur les tronçons d'extrémités T32, T36 des premier et deuxième conduits intérieurs 32, 36.

Selon une configuration, le système de raccordement intérieur 40 est configuré de sorte que lorsque de l'hydrogène à une température cryogénique circule dans les premier et deuxième conduits intérieurs 32, 36, au moins l'une des première et deuxième parties 44.1 44.2 du manchon 44 exerce un effort de contact sur le tronçon d'extrémité T32, T36 du premier ou deuxième conduit intérieur 32, 36 correspondant plus élevé qu'en l'absence d'hydrogène lors du raccordement des premier et deuxième conduits 28, 30. Selon une configuration, le manchon 44 est réalisé en un premier matériau différent de ceux des premier et deuxième conduits intérieurs 32, 36, ce premier matériau présentant un coefficient de dilatation plus important que ceux des premier et deuxième conduits intérieurs 32, 36.

Bien entendu, l'invention n'est pas limitée à ce mode de réalisation pour le système de raccordement intérieur 40.

Comme illustré sur les figures 3 et 4, les premier et deuxième conduits extérieurs 34, 38 comprennent respectivement des premier et deuxième chants d'extrémité 34.1, 38.1 situés dans des plans transversaux (perpendiculaires aux premier et deuxième axes A28, A30).

Selon un premier agencement privilégié visible sur la figure 3, les premier et deuxième chants d'extrémité 34.1, 38.1 sont espacés d'une distance suffisante pour permettre d'accéder au système de raccordement intérieur 40.

Bien entendu, l'invention n'est pas limitée à cet agencement. Ainsi, selon un deuxième agencement illustré sur la figure 4, les premier et deuxième chants d'extrémité 34.1, 38.1 pourraient être faiblement espacés, voire en contact l'un avec l'autre. Selon ce deuxième agencement, le manchon 44 du système de raccordement intérieur 40 est relié à l'un des premier et deuxième conduits intérieurs 32, 36, avant que les premier et deuxième conduits 28, 30 ne soient rapprochés, et s'emmanche automatiquement autour de l'autre premier ou deuxième conduits intérieurs 32, 36 lorsque les premier et deuxième conduits 28, 30 sont rapprochés.

Selon un premier mode de réalisation visible sur la figure 3, le système de raccordement extérieur 42 comprend un manchon 46 qui présente une première partie 46.1 positionnée autour d'un premier tronçon d'extrémité T34 du premier conduit extérieur 34, une deuxième partie 46.2 positionnée autour d'un deuxième tronçon d'extrémité T38 du deuxième conduit extérieur 38 ainsi qu'une partie intermédiaire 46.3 située entre les première et deuxième parties 46.1, 46.2.

Selon une configuration, le système de raccordement extérieur 42 est démontable.

Selon un premier mode de réalisation, les premier et deuxième tronçons d'extrémité T34, T38 présentent chacun un filetage et un diamètre extérieur supérieur aux diamètres extérieurs des premier et deuxième conduits extérieurs 34, 38 en dehors des premier et deuxième tronçons d'extrémité T34, T38 filetés. En complément, les première et deuxième parties 46.1, 46.2 du manchon 46 présentent chacune un taraudage adapté au filetage du premier ou deuxième tronçon d'extrémité T34, T38 du premier ou deuxième conduit extérieur 34, 38 correspondant. La partie intermédiaire 46.3 du manchon 46 présente un diamètre intérieur supérieur au plus grand diamètre extérieur du premier ou deuxième conduit extérieur 34, 38 pour permettre au manchon 46 de coulisser par rapport audit premier ou deuxième conduit extérieur 34, 38 lors du raccordement des premier et deuxième conduits 28, 30.

Pour renforcer l'étanchéité entre le manchon 46 et les conduits extérieurs 34, 36 en cas de fuite d'hydrogène, le manchon 46 est réalisé en un premier matériau différent de ceux des premier et deuxième conduits extérieurs 34, 38, ce premier matériau présentant un coefficient de dilatation plus important que ceux des premier et deuxième conduits extérieurs 34, 38. Ainsi, en cas de fuite d'hydrogène au niveau du système de raccordement interne 40, le manchon 46 et les premier et deuxième conduits extérieurs 34, 38 vont être soumis à une température nettement inférieure à celle en l'absence de fuite, provoquant leur contraction. Dans la mesure où le manchon 46 présente un coefficient de dilatation plus important, il va se contracter de manière plus importante que les premier et deuxième conduits extérieurs 34, 38, ce qui va renforcer la pression de serrage du manchon 46 sur les premier et deuxième conduits extérieurs 34, 38. A titre d'exemple, le manchon 46 est réalisé en alliage d'aluminium et les premier et deuxième conduits extérieurs 34, 38 sont en acier.

Bien entendu, l'invention n'est pas limitée à ce mode de réalisation pour le système de raccordement extérieur 42.

Selon un deuxième mode de réalisation visible sur la figure 4, le système de raccordement extérieur 42 comprend :
- une première collerette 48 solidaire du premier conduit extérieur 34, en saillie par rapport à ce dernier, présentant une première face latérale orientée vers le deuxième conduit extérieur 38 en fonctionnement et positionnée dans un plan perpendiculaire au premier axe A28, ainsi qu'une deuxième face latérale opposée à la première face frontale et formant avec cette dernière un angle qui s'évase en direction du premier axe A28 ;
- une deuxième collerette 50 solidaire du deuxième conduit extérieur 38, en saillie par rapport à ce dernier, présentant une première face latérale orientée vers le premier conduit extérieur 34 en fonctionnement et positionnée dans un plan perpendiculaire au deuxième axe A30, ainsi qu'une deuxième face latérale opposée à la première face frontale et formant avec cette dernière un angle qui s'évase en direction du deuxième axe A30 ;
- un collier de serrage 52, avec une section en U ou en V par exemple, présentant deux ailes, configurées pour être plaquées contre les deuxièmes faces latérales des première et deuxième collerettes 48, 50.

Comme pour le premier mode de réalisation, le collier de serrage 52 est réalisé en un premier matériau différent de ceux des premier et deuxième conduits extérieurs 34, 38, ce premier matériau présentant un coefficient de dilatation plus important que ceux des premier et deuxième conduits extérieurs 34, 38. Ainsi, en cas de fuite d'hydrogène, l'effort de serrage du collier de serrage 52 sera plus important qu'en l'absence de fuite.

Quel que soit le mode de réalisation, le système de raccordement extérieur 42 comprend une première partie qui coopère avec un premier tronçon d'extrémité T34 du premier conduit extérieur 34, en l'entourant par exemple, une deuxième partie qui coopère avec un deuxième tronçon d'extrémité T38 du deuxième conduit extérieur 38, en l'entourant par exemple ; le système de raccordement extérieur 42 étant configuré de sorte qu'à une première température, en présence d'une fuite d'hydrogène, au moins l'une des première et deuxième parties exerce un effort de contact sur le premier ou deuxième tronçon d'extrémité T34, T38 du premier ou deuxième conduit extérieur 34, 38 correspondant plus élevé qu'à une deuxième température supérieure à la première température en l'absence de fuite d'hydrogène. Selon une configuration, le système de raccordement extérieur 42 est réalisé en un premier matériau différent de ceux des premier et deuxième conduits extérieurs 34, 38, ce premier matériau présentant un coefficient de dilatation plus important que ceux des premier et deuxième conduits extérieurs 34, 38.

Selon une configuration, le dispositif de raccordement 26 comprend au moins un matériau sacrificiel intercalé entre le système de raccordement extérieur 42 et le tronçon d'extrémité T34, T38 du premier ou/et deuxième conduit extérieur 34, 38. Selon un mode de réalisation, le filetage d'au moins un tronçon d'extrémité T34, T38 des premier et deuxième conduits extérieurs 34, 38 est réalisé en un matériau sacrificiel comme en indium par exemple. Ainsi, en cas de fuite d'hydrogène, le système de raccordement extérieur 42 exerce un effort concentrique sur au moins un tronçon d'extrémité des premier et deuxième conduits extérieurs 34, 38, provoquant une déformation du matériau sacrificiel. Cette déformation permet de limiter les risques de fuite entre le système de raccordement extérieur 42 et le tronçon d'extrémité des premier ou deuxième conduits extérieurs 34, 38 correspondant.

Selon un agencement, le dispositif de raccordement 26 comprend un espace annulaire 54 autour du système de raccordement intérieur 40 ainsi qu'autour d'au moins une portion de chacun des premier et deuxième conduits intérieurs 32, 36 située de part et d'autre du système de raccordement intérieur 40. Selon une configuration, le dispositif de raccordement comprend au moins un élément isolant 56 thermique positionné dans l'espace annulaire 54 et le garnissant au moins partiellement. A titre indicatif, l'élément isolant 56 occupe au moins 75% de l'espace annulaire 54. Selon un agencement, l'élément isolant 56 ne remplit pas totalement l'espace annulaire 54. Ainsi, l'espace annulaire 54 comprend un volume restant soumis à un vide de l'ordre de 0,1 à 0,01 % atmosphère par exemple.

Selon les variantes, l'élément isolant 56 peut être un isolant de type MLI (pour Multi Layer Insulation en anglais), une mousse ou au moins un matelas rempli de microbilles.

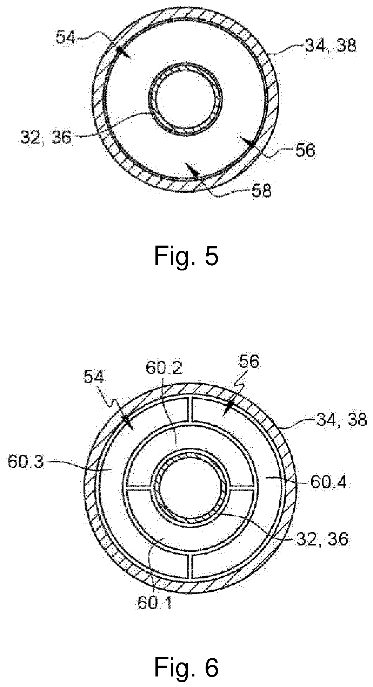

Selon un premier mode de réalisation visible sur la figure 5, l'élément isolant 56 comprend un matelas 58 rempli de microbilles de forme annulaire.

Selon un autre mode de réalisation, l'élément isolant 56 comprend plusieurs couches de matelas 60.1 à 60.4 remplis de microbilles, chaque matelas ayant une forme demi-cylindrique, les interstices entre les matelas 60.1, 60.2 d'une première couche étant décalés par rapport aux interstices entre les matelas 60.3, 60.4 d'une deuxième couche adjacente à la première couche.

Quel que soit le mode de réalisation, chaque matelas rempli de microbilles garantit une isolation thermique résiduelle en cas de perte de vide autour du matelas, entre les conduits intérieurs et extérieurs.

Bien entendu, l'invention n'est pas limitée à ces modes de réalisation pour l'isolation thermique prévue entre les conduits intérieurs et extérieurs.

De même, l'invention n'est pas limitée à une canalisation d'hydrogène. Ainsi, un dispositif de raccordement peut être utilisé pour raccorder un premier conduit d'une canalisation et un deuxième conduit d'une source d'hydrogène ou d'un appareil utilisant de l'hydrogène.

## Revendications

1. Dispositif de raccordement de premier et deuxième conduits (28, 30) à double paroi, le premier conduit (28) comportant un premier conduit intérieur (32) qui présente un tronçon d'extrémité (T32) et un chant d'extrémité (32.1) ainsi qu'un premier conduit extérieur (34), espacé du premier conduit intérieur (32), qui présente un tronçon d'extrémité (T34) et un chant d'extrémité (34.1), le deuxième conduit (30) comportant un deuxième conduit intérieur (36) qui présente un tronçon d'extrémité (T36) et un chant d'extrémité (36.1) ainsi qu'un deuxième conduit extérieur (38), espacé du deuxième conduit intérieur (36), qui présente un tronçon d'extrémité (T38) et un chant d'extrémité (38.1), le dispositif de raccordement comprenant un système de raccordement intérieur (40) configuré pour relier les premier et deuxième conduits intérieurs (32, 36) ainsi qu'un système de raccordement extérieur (42) configuré pour relier les premier et deuxième conduits extérieurs (34, 38) et comportant une première partie qui coopère avec le tronçon d'extrémité (T34) du premier conduit extérieur (34) ainsi qu'une deuxième partie qui coopère avec le tronçon d'extrémité (T38) du deuxième conduit extérieur (38), **caractérisé en ce que** le système de raccordement extérieur (42) est configuré de sorte qu'à une première température au moins l'une des première et deuxième parties exerce un effort de contact sur le tronçon d'extrémité (T34, T38) du premier ou deuxième conduit extérieur (34, 38) correspondant plus élevé qu'à une deuxième température supérieure à la première température.

2. Dispositif de raccordement selon la revendication 1, **caractérisé en ce que** le système de raccordement extérieur (42) est réalisé en un premier matériau différent de ceux des premier et deuxième conduits extérieurs (34, 38), ce premier matériau présentant un coefficient de dilatation plus important que ceux des premier et deuxième conduits extérieurs (34, 38).

3. Dispositif de raccordement selon la revendication 1 ou 2, **caractérisé en ce que** les chants d'extrémité (34.1, 38.1) des premier et deuxième conduits extérieurs (34, 38) sont espacés d'une distance permettant d'accéder au système de raccordement intérieur (40) et **en ce que** le système de raccordement extérieur (42) comprend un manchon (46) qui présente une première partie (46.1) positionnée autour du tronçon d'extrémité (T34) du premier conduit extérieur (34), une deuxième partie (46.2) positionnée autour du tronçon d'extrémité (T38) du deuxième conduit extérieur (38) ainsi qu'une partie intermédiaire (46.3) située entre les première et deuxième parties (46.1, 46.2).

4. Dispositif de raccordement selon la revendication précédente, **caractérisé en ce que** les tronçons d'extrémité (T34, T38) des premier et deuxième conduits extérieurs (34, 38) présentent chacun un filetage et un diamètre extérieur supérieur aux diamètres extérieurs des premier et deuxième conduits extérieurs (34, 38) en dehors des tronçons d'extrémité (T34, T38) filetés et **en ce que** les première et deuxième parties (46.1, 46.2) du manchon (46) présentent chacune un taraudage adapté au filetage du tronçon d'extrémité (T34, T38) du premier ou deuxième conduit extérieur (34, 38) correspondant, la partie intermédiaire (46.3) du manchon (46) présentant un diamètre intérieur supérieur au plus grand diamètre extérieur du premier ou deuxième conduit extérieur (34, 38) pour permettre au manchon (46) de coulisser par rapport audit premier ou deuxième conduit extérieur (34, 38).

5. Dispositif de raccordement selon l'une des revendications précédentes, **caractérisé en ce que** le dispositif de raccordement (26) comprend au moins un matériau sacrificiel intercalé entre le système de raccordement extérieur (42) et le tronçon d'extrémité (T34, T38) du premier ou/et deuxième conduit extérieur (34, 38) correspondant.

6. Dispositif de raccordement selon l'une des revendications 4 et 5, **caractérisé en ce que** le filetage d'au moins un tronçon d'extrémité (T34, T38) des premier et deuxième conduits extérieurs (34, 38) est réalisé en un matériau sacrificiel.

7. Dispositif de raccordement selon l'une des revendications précédentes, **caractérisé en ce que** les chants d'extrémité (32.1, 36.1) des premier et deuxième conduits intérieurs (32, 36) sont faiblement espacés et **en ce que** le système de raccordement intérieur (40) comprend un manchon (44) qui présente une première partie (44.1) positionnée autour du tronçon d'extrémité (T32) du premier conduit intérieur (32) ainsi qu'une deuxième partie (44.2) positionnée autour du tronçon d'extrémité (T36) du deuxième conduit intérieur (36).

8. Dispositif de raccordement selon la revendication précédente, **caractérisé en ce que** le manchon (44) est réalisé en un premier matériau différent de ceux des premier et deuxième conduits intérieurs (32, 36), le premier matériau présentant un coefficient de dilatation plus important que ceux des premier et deuxième conduits intérieurs (32, 36).

9. Dispositif de raccordement selon l'une des revendications précédentes, **caractérisé en ce que** le dispositif de raccordement comprend un espace annulaire (54), autour du système de raccordement intérieur (40) ainsi qu'autour d'au moins une portion de chacun des premier et deuxième conduits intérieurs (32, 36) située de part et d'autre du système de raccordement intérieur (40), et au moins un élément isolant (56) thermique positionné dans l'espace annulaire (54) et le garnissant au moins partiellement.

10. Dispositif de raccordement selon la revendication précédente, **caractérisé en ce que** l'élément isolant (56) occupe au moins 75% de l'espace annulaire (54), l'espace annulaire (54) comprenant un volume restant soumis à un vide.

11. Dispositif de raccordement selon la revendication 9 ou 10, **caractérisé en ce que** l'élément isolant (56) comprend au moins un matelas rempli de microbilles.

12. Dispositif de raccordement selon la revendication précédente, **caractérisé en ce que** l'élément isolant (56) comprend un matelas (58) rempli de microbilles de forme annulaire.

13. Dispositif de raccordement selon la revendication 11, **caractérisé en ce que** l'élément isolant (56) comprend plusieurs couches de matelas (60.1 à 60.4) remplis de microbilles, chaque matelas ayant une forme demi-cylindrique, les interstices entre les matelas (60.1, 60.2) d'une première couche étant décalés par rapport aux interstices entre les matelas (60.3, 60.4) d'une deuxième couche adjacente à la première couche.

14. Canalisation d'hydrogène comprenant au moins un dispositif de raccordement selon l'une des revendications précédentes.

## Patentansprüche

1. Vorrichtung zum Verbinden einer ersten und einer zweiten Doppelwandleitung (28, 30), wobei die erste Leitung (28) eine erste Innenleitung (32), die einen Endabschnitt (T32) und eine Endkante (32.1) aufweist, sowie eine erste Außenleitung (34), die von der ersten Innenleitung (32) mit Abstand angeordnet ist und einen Endabschnitt (T34) und eine Endkante (34.1) aufweist, umfasst, wobei die zweite Leitung (30) eine zweite Innenleitung (36), die einen Endabschnitt (T36) und eine Endkante (36.1) aufweist, sowie eine zweite Außenleitung (38), die von der zweiten Innenleitung (36) mit Abstand angeordnet ist und einen Endabschnitt (T38) und eine Endkante (38.1) aufweist, umfasst, wobei die Verbindungsvorrichtung Folgendes beinhaltet: ein Innenverbindungssystem (40), das dazu konfiguriert ist, die erste und die zweite Innenleitung (32, 36) zu verbinden, sowie ein Außenverbindungssystem (42), das dazu konfiguriert ist, die erste und die zweite Außenleitung (34, 38) zu verbinden, und das einen ersten Teil, der mit dem Endabschnitt (T34) der ersten Außenleitung (34) zusammenwirkt, sowie einen zweiten Teil, der mit dem Endabschnitt (T38) der zweiten Außenleitung (38) zusammenwirkt, umfasst, **dadurch gekennzeichnet, dass** das Außenverbindungssystem (42) so konfiguriert ist, dass bei einer ersten Temperatur mindestens einer von dem ersten und dem zweiten Teil eine Kontaktkraft auf den Endabschnitt (T34, T38) der entsprechenden ersten oder zweiten Außenleitung (34, 38) ausübt, die größer ist als bei einer zweiten Temperatur, die höher als die erste Temperatur ist.

2. Verbindungsvorrichtung nach Anspruch 1, **dadurch gekennzeichnet, dass** das Außenverbindungssystem (42) aus einem ersten Material hergestellt ist, das sich von denjenigen der ersten und der zweiten Außenleitung (34, 38) unterscheidet, wobei dieses erste Material einen Ausdehnungskoeffizienten aufweist, der größer als diejenigen der ersten und der zweiten Außenleitung (34, 38) ist.

3. Verbindungsvorrichtung nach Anspruch 1 oder 2, **dadurch gekennzeichnet, dass** die Endkanten (34.1, 38.1) der ersten und der zweiten Außenleitung (34, 38) um einen Abstand voneinander entfernt angeordnet sind, der einen Zugang zu dem Innenverbindungssystem (40) gestattet, und dass das Außenverbindungssystem (42) eine Muffe (46) beinhaltet, die einen ersten Teil (46.1), der um den Endabschnitt (T34) der ersten Außenleitung (34) herum positioniert ist, einen zweiten Teil (46.2), der um den Endabschnitt (T38) der zweiten Außenleitung (38) herum angeordnet ist, sowie einen Zwischenteil (46.3), der sich zwischen dem ersten und dem zweiten Teil (46.1, 46.2) befindet, beinhaltet.

4. Verbindungsvorrichtung nach dem vorhergehenden Anspruch, **dadurch gekennzeichnet, dass** die Endabschnitte (T34, T38) der ersten und der zweiten Außenleitung (34, 38) jeweils ein Gewinde und einen Außendurchmesser aufweisen, der größer als die Außendurchmesser der ersten und der zweiten Außenleitung (34, 38) außerhalb der mit Gewinde versehenen Endabschnitte (T34, T38) ist, und dass der erste und der zweite Teil (46.1, 46.2) der Muffe (46) jeweils ein Innengewinde aufweisen, das an das Gewinde des Endabschnitts (T34, T38) der entsprechenden ersten oder zweiten Außenleitung (34, 38) angepasst ist, wobei der Zwischenteil (46.3) der Muffe (46) einen Innendurchmesser aufweist, der größer als der größte Außendurchmesser der ersten oder der zweiten Außenleitung (34, 38) ist, um es der Muffe (46) zu gestatten, in Bezug auf die erste oder die zweite Außenleitung (34, 38) zu gleiten.

5. Verbindungsvorrichtung nach einem der vorhergehenden Ansprüche, **dadurch gekennzeichnet, dass** die Verbindungsvorrichtung (26) mindestens ein Opfermaterial beinhaltet, das zwischen das Außenverbindungssystem (42) und den Endabschnitt (T34, T38) der entsprechenden ersten und/oder zweiten Außenleitung (34, 38) eingefügt ist.

6. Verbindungsvorrichtung nach einem der Ansprüche 4 und 5, **dadurch gekennzeichnet, dass** das Gewinde mindestens eines Endabschnitts (T34, T38) der ersten und der zweiten Außenleitung (34, 38) aus einem Opfermaterial hergestellt ist.

7. Verbindungsvorrichtung nach einem der vorhergehenden Ansprüche, **dadurch gekennzeichnet, dass** die Endkanten (32.1, 36.1) der ersten und der zweiten Innenleitung (32, 36) um einen geringen Abstand voneinander entfernt angeordnet sind und dass das Innenverbindungssystem (40) eine Muffe (44) beinhaltet, die einen ersten Teil (44.1), der um den Endabschnitt (T32) der ersten Innenleitung (32) herum positioniert ist, sowie einen zweiten Teil (44.2), der um den Endabschnitt (T36) der zweiten Innenleitung (36) herum angeordnet ist, beinhaltet.

8. Verbindungsvorrichtung nach dem vorhergehenden Anspruch, **dadurch gekennzeichnet, dass** die Muffe (44) aus einem ersten Material hergestellt ist, das sich von denjenigen der ersten und der zweiten Innenleitung (32, 36) unterscheidet, wobei das erste Material einen Ausdehnungskoeffizienten aufweist, der größer als diejenigen der ersten und der zweiten Innenleitung (32, 36) ist.

9. Verbindungsvorrichtung nach einem der vorhergehenden Ansprüche, **dadurch gekennzeichnet, dass** die Verbindungsvorrichtung einen ringförmigen Raum (54) um das Innenverbindungssystem (40) herum sowie um mindesten einen Teilabschnitt von jeder von der ersten und der zweiten Innenleitung (32, 36), der sich auf beiden Seiten des Innenverbindungssystems (40) befindet, herum und mindestens ein thermisches Isolierelement (56), das in dem ringförmigen Raum (54) positioniert ist und diesen mindestens teilweise ausfüllt, beinhaltet.

10. Verbindungsvorrichtung nach dem vorhergehenden Anspruch, **dadurch gekennzeichnet, dass** das Isolierelement (56) mindestens 75 % des ringförmigen Raumes (54) einnimmt, wobei der ringförmige Raum (54) ein Volumen beinhaltet, das einem Vakuum ausgesetzt bleibt.

11. Verbindungsvorrichtung nach Anspruch 9 oder 10, **dadurch gekennzeichnet, dass** das Isolierelement (56) mindestens ein mit Mikrokügelchen gefülltes Polster beinhaltet.

12. Verbindungsvorrichtung nach dem vorhergehenden Anspruch, **dadurch gekennzeichnet, dass** das Isolierelement (56) ein ringförmiges, mit Mikrokügelchen gefülltes Polster (58) beinhaltet.

13. Verbindungsvorrichtung nach Anspruch 11, **dadurch gekennzeichnet, dass** das Isolierelement (56) mehrere Schichten von mit Mikrokügelchen gefüllten Polstern (60.1 bis 60.4) beinhaltet, wobei jedes Polster eine halbzylindrische Form aufweist, wobei die Zwischenräume zwischen den Polstern (60.1, 60.2) einer ersten Schicht in Bezug auf die Zwischenräume zwischen den Polstern (60.3, 60.4) einer zweiten Schicht, die an die erste Schicht angrenzt, versetzt sind.

14. Wasserstoffleitung, die mindestens eine Verbindungsvorrichtung nach einem der vorhergehenden Ansprüche beinhaltet.

## Claims

1. Device for connection of first and second double-wall pipes (28, 30), the first pipe (28) including a first interior pipe (32) that has an end section (T32) and an end surface (32.1) and a first exterior pipe (34) spaced from the first interior pipe (32) that has an end section (T34) and an end surface (34.1), the second pipe (30) including a second interior pipe (36) that has an end section (T36) and an end surface (36.1) and second exterior pipe (38) spaced from the second interior pipe (36) that has an end section (T38) and an end surface (38.1), the connection device including an interior connection system (40) configured to connect the first and second interior pipes (32, 36) and an exterior connection system (42) configured to connect the first and second exterior pipes (34, 38) and including a first part that cooperates with the end section (T34) of the first exterior pipe (34) and a second part that cooperates with the end section (T38) of the second exterior pipe (38), **characterized in that** the exterior connection system (42) is configured so that at a first temperature at least one of the first and second parts exerts a contact force on the end section (T34, T38) of the corresponding first or second exterior pipe (34, 38) greater than at a second temperature higher than the first temperature.

2. Connection device according to Claim 1, **characterized in that** the exterior connection system (42) is made of a first material different from those of the first and second exterior pipes (34, 38), this first material having a coefficient of expansion greater than those of the first and second exterior pipes (34, 38).

3. Connection device according to Claim 1 or 2, **characterized in that** the end surfaces (34.1, 38.1) of the first and second exterior pipes (34, 38) are spaced by a distance allowing access to the interior connection system (40) and **in that** the exterior connection system (42) includes a sleeve (46) that has a first part (46.1) positioned around the end section (T34) of the first exterior pipe (34), a second part (46.2) positioned around the end section (T38) of the second exterior pipe (38) and an intermediate part (46.3) situated between the first and second parts (46.1, 46.2).

4. Connection device according to the preceding claim, **characterized in that** the end sections (T34, T38) of the first and second exterior pipes (34, 38) each have a male thread and an outside diameter greater than the outside diameters of the first and second exterior pipes (34, 38) apart from in the male threaded end sections (T34, T38) and **in that** the first and second parts (46.1, 46.2) of the sleeve (46) each have a female thread matching the male thread of the end section (T34, T38) of the corresponding first or second exterior pipe (34, 38), the intermediate part (46.3) of the sleeve (46) having an inside diameter greater than the greatest outside diameter of the first or second exterior pipe (34, 38) to allow the sleeve (46) to slide relative to said first or second exterior pipe (34, 38).

5. Connection device according to any of the preceding claims, **characterized in that** the connection device (26) includes at least one sacrificial material inserted between the exterior connection system (42) and the end section (T34, T38) of the corresponding first and/or second exterior pipe (34, 38).

6. Connection device according to either one of Claims 4 and 5, **characterized in that** the male thread of at least one end section (T34, T38) of the first and second exterior pipes (34, 38) is made of a sacrificial material.

7. Connection device according to any of the preceding claims, **characterized in that** the end surfaces (32.1, 36.1) of the first and second interior pipes (32, 36) are closely spaced and **in that** the interior connection system (40) includes a sleeve (44) that has a first part (44.1) positioned around the end section (T32) of the first interior pipe (32) and a second part (44.2) positioned around the end section (T36) of the second interior pipe (36) .

8. Connection device according to the preceding claim, **characterized in that** the sleeve (44) is made of a first material different from those of the first and second interior pipes (32, 36), the first material having a coefficient of expansion greater than those of the first and second interior pipes (32, 36).

9. Connection device according to any of the preceding claims, **characterized in that** the connection device includes an annular space (54) around the interior connection system (40) and around at least a portion of each of the first and second interior pipes (32, 36) situated on either side of the interior connection system (40) and at least one thermal insulation element (56) positioned in the annular space (54) and filling it at least partly.

10. Connection device according to the preceding claim, **characterized in that** the insulation element (56) occupies at least 75% of the annular space (54), the annular space (54) having a remaining volume subjected to a vacuum.

11. Connection device according to Claim 9 or 10, **characterized in that** the insulation element (56) includes at least one mattress filled with microballs.

12. Connection device according to the preceding claim, **characterized in that** the insulation element (56) includes a mattress (58) of annular shape filled with microballs.

13. Connection device according to Claim 11, **characterized in that** the insulation element (56) includes layers of mattress (60.1 to 60.4) filled with microballs, each mattress having a semi-cylindrical shape, the interstices between the mattresses (60.1, 60.2) of a first layer being offset relative to the interstices between the mattresses (60.3, 60.4) of a second layer adjacent to the first layer.

14. Hydrogen line including at least one connection device according to any of the preceding claims.
